**Europäisches Patentamt**

**European Patent Office**

**Office européen des brevets**

(11) Veröffentlichungsnummer: **0 061 553**
**B1**

# (12) EUROPÄISCHE PATENTSCHRIFT

(45) Veröffentlichungstag der Patentschrift:
**12.09.84**

(21) Anmeldenummer: **81730042.9**

(22) Anmeldetag: **30.03.81**

(51) Int. Cl.³: **F 16 L 15/00, B 05 D 3/00**

(54) Verfahren zur Oberflächenbehandlung von Gewinden.

(43) Veröffentlichungstag der Anmeldung:
**06.10.82 Patentblatt 82/40**

(45) Bekanntmachung des Hinweises auf die Patenterteilung:
**12.09.84 Patentblatt 84/37**

(84) Benannte Vertragsstaaten:
**AT BE DE FR GB IT NL SE**

(56) Entgegenhaltungen:
**DE - A - 2 422 712**
**US - A - 3 568 746**

(73) Patentinhaber: **MANNESMANN Aktiengesellschaft,
Mannesmannufer 2, D-4000 Düsseldorf 1 (DE)**

(72) Erfinder: **Hübecker, Hans, Ing.grad., Rath. Kreuzweg 20,
D-4000 Düsseldorf (DE)**
Erfinder: **Lenze, Friedrich, Dr. Ing., Münsterstrasse 336,
D-4000 Düsseldorf (DE)**
Erfinder: **Missaire, Gerhard, Ing.grad., Broleck 25b,
D-5207 Ruppichteroth (DE)**

(74) Vertreter: **Meissner, Peter E., Dipl.-Ing. et al,
Patentanwälte Dipl.-Ing. Peter E. Meissner Dipl.-Ing.
Hans-Joachim Presting Herbertstrasse 22,
D-1000 Berlin 33 (DE)**

## Beschreibung

Die Erfindung betrifft ein Verfahren zur Oberflächenbehandlung von Gewinden an mehrfach miteinander oder mit Muffen oder Nippel zu verschraubenden Stahlrohren für die Erdöl- und Erdgasförderindustrie durch Behandlung der tragenden Flächen der Gewinde oder der gesamten Gewindefläche, einschliesslich sogenannter Schulter- und Dichtungsflächen Metall auf Metall und durch Aufbringen oder Anwenden eines den Gleitwiderstand beim Zusammenschrauben mindernden Stoffes.

Es ist bekannt, dass die Gewindeverbindungen für die Erdölförderindustrie durch das Verschrauben und die Nutzbelastung sehr hohen Flächenpressungen ausgesetzt sind. Viele dieser Verbindungen müssen trotzdem mehrfach verschraubt und wieder gelöst werden. Unbehandelte unter so hohem Druck gegeneinander gepresste Flächen an den Rohren aus unlegierten bis zu hochlegierten Stählen mit Zusätzen von Cr, Ni, Mo und andere in normalisiertem oder vergütetem Zustand neigen zum Fressen oder allgemein zur gegenseitigen Beschädigung.

Im einfachsten Fall versucht man durch Auftragen von Hochdruckfett die Beschädigung zu vermeiden. Ausserdem ist es bekannt, den Werkstoff oberflächlich chemisch umzuwandeln oder ein fremdes Metall aufzutragen. Hierzu rechnet man auch das bekannte Phosphatieren.

Diese Behandlungen erweisen sich mit zunehmenden Anforderungen als nicht zuverlässig. Aufgabe der gegenwärtigen Erfindung ist ein verbesserter Schutz gegen Fressen, insbesondere die Verbesserung der Haftung eines aufgetragenen Gleitstoffes auf den Grundstoff Stahl und zur Verbesserung des Zusammenhaltes des Gleitstoffes in einer ununterbrochenen Schicht, die auch noch gegen mechanische Beschädigung widerstandsfähig ist.

Diese Aufgabe löst die Erfindung durch die kennzeichnenden Merkmale.

## Patentanspruch

Verfahren zur Oberflächenbehandlung von Gewinden an mehrfach miteinander oder mit Muffen oder Nippel zu verschraubenden Stahlrohren für die Erdöl- und Erdgasförderindustrie durch Behandlung der tragenden Flächen der Gewinde oder der gesamten Gewindefläche, einschliesslich sogenannter Schulter- und Dichtungsflächen Metall auf Metall und durch Aufbringen oder Anwenden eines den Gleitwiderstand beim Zusammenschrauben mindernden Stoffes, dadurch gekennzeichnet, dass die Behandlung in der Erzeugung einer Oberflächenrauhtiefe von ca. 7-15 μm durch ein Druckstrahlen mit kantigem bis rundlichem Korn aus Korund oder Siliziumkarbid von 40 bis 200 μm und das Aufbringen durch Sprühen, Tauchen oder Anstreichen eines über Raumtemperatur aushärtbaren Kunstharzlackes mit Molybdänsulfid (MoS$_2$) als Pigment in einer Schichtdicke von 5 bis 20 μm und einem nachfolgenden Erwärmen zum Aushärten besteht.

## Revendication

Procédé pour le traitement superficiel de filetages sur des tubes d'acier devant être vissés plusieurs fois les uns avec les autres ou avec des manchons ou des raccords filetés, pour l'industrie du transport du pétrole ou du gaz naturel, par le traitement des surfaces portantes des filetages ou de toute la surface du filetage, y compris les faces d'épaulement et d'étanchéité métal sur métal et par l'application ou l'utilisation d'un matériau réduisant la résistance au glissement lors du vissage, caractérisé en ce que le traitement consiste dans la constitution d'une profondeur d'aspérité de surface d'environ 7-15 μm par un jet sous pression de grains à arêtes vives ou arrondis de corindon ou de carbure de silicium de 40 à 200 μm et dans l'application par aspersion, plongée ou badigeonnage d'une laque de résine synthétique durcissable à la température ambiante, comprenant du sulfure de molybdène (MoS$_2$) comme pigment, en une épaisseur de couche allant de 5 à 20 μm et dans un réchauffement consécutif pour le durcissement.

## Claim

A process for the surface treatment of threads on steel pipes for the oil and natural gas conveying industry, which are to be multiply screwed to one another or to sleeves or nipples, by treating the supporting surfaces of the threads or the entire thread surface, including so-called shoulder and sealing surfaces metal to metal and by applying or using a material which reduces the sliding resistance when screwing together, characterised in that the treatment consists in the production of a surface roughness depth of about 7-15 μm by pressure blasting with angular to rounded grains made of corundum or silicon carbide of 40 to 200 μm, and the application by spraying, dipping or coating of a synthetic resin varnish hardenable above room temperature, and having molybdenum sulphide (MoS$_2$) as pigment, in a layer thickness of 5 to 20 μm, and subsequent heating for hardening.